# EUROPEAN PATENT APPLICATION

(11) **EP 1 681 120 A2**
(43) Date of publication of application: **19.07.2006**
(21) Application number: 06000793.7
(22) Date of filing: 14.01.2006
(51) Int. Cl.: B23K 7/00, B23K 10/00

(54) **Cutting machine**

(30) Priority: 18.01.2005 ES 200500082
(71) Applicant: Danobat, S. Coop., 20870 Elgoibar (Guipuzkoa) (ES)
(72) Inventor: Aizpurua, Julian, 20720 Azkoitia(Guipuzcoa) (ES); Sabalza, Xabier, 20577 Antzuola (Guipuzcoa) (ES)
(74) Representative: Ziebell, Arnd

(57) **Abstract**

Cutting machine, in which a means of cutting (1) is mounted in assembly of variable positioning on a carrying column (2), said means of cutting (1) being in lateral disposition by means of an articulation (5) of perpendicular axis on the column (2) and in articulated coupling (7) according to an axis perpendicular with respect to the aforementioned articulation (5), for the cutting positions by means of combined rotation on both articulations (5 and 7).

## Description

### Field of the art.

The present invention is related with the cutting machines of the type of those which use a plasma torch, a machine being proposed which allows the cutting operations to be automated and cuts of all types to be carried out under very advantageous conditions.

### State of the art.

For the cutting of pieces, like metallic tubes, profiles or plates, machines are known which use a plasma torch, which is mounted incorporated in a manipulator support, with which it is positioned and moved to carry out the cutting operations.

There exist in this sense machines which incorporate a support for the cutting torch in the form of a manipulator of anthropomorphic robot type, which has some operative singularities which mean that when two axis are aligned a blind spot is produced, with which errors occur, requiring manual corrections which impede the automation.

To resolve the problem of automation of the cutting, arrangements of supports have been developed formed by a column which can move in three directions, forming a Cartesian robot, the cutting torch being incorporated on the end of said column with a movement of horizontal rotation and a pendular movement, which allows working effectively to carry out cutting of profiles in Tee, double Tee, tubular, etc., operating on the top part thereof.

However, said embodiments present problems when making cuts in plates or wide elements operating on the bottom part, since the distance of depth at which they allow working from the side of the work piece, is very limited, which is further aggravated when carrying out bevel cuts under those conditions, because the positioning of the torch in an inclined disposition to carry out said cuts in a certain direction reduces still more the distance between the torch and the support column, diminishing the possible distance of the working depth from the edge of the piece.

### Object of the invention

In accordance with the invention a machine is disclosed intended preferably for said application of plasma cutting, which has been developed according to a particularization which confers functional characteristics for operating advantageously in the performance of cuts of whatever type on the work pieces.

This machine object of the invention likewise consists of a column carrying the means of cutting, but with the particularity that, in this case, the disposition of said means of cutting with respect to the carrying column is established by means of a rotating assembly on the side of the column, with respect to a axially coupling perpendicular to said column, whilst the means of cutting is arranged in turn in rotary assembly on the support for coupling to the column, on an axis perpendicular to that of the coupling on the column.

An assembly disposition is therefore obtained of the means of cutting which, by means of the combination of movements on the two perpendicular rotary couplings of the assembly, allows the means of cutting to be located in variable positions of inclination with respect to the carrying column, maintaining constant the distance of lateral separation between said means of cutting and the column, which allows bevel cuts to be carried out without diminishing the distance of depth from the side of the work pieces, offering therefore an advantageous availability for carrying out bevel cuts operating on the bottom part of the pieces.

With respect to the support for coupling on the carrying column the means of cutting is joined by an elbowed arm, which favours the positioning of said means of cutting in an inclined manner for bevel cuts, a structuring of said arm being foreseen in telescopic embodiment, or with a dismountable disposition for its replacement, or with an auxiliary extension complement, to be fitted to different distances of operative reach of the cuts from the side of the pieces.

All told, said machine object of the invention offers some certainly advantageous characteristics for its function, acquiring individuality and preferable character with respect to the conventional machines of the same application.

### Description of the figures.

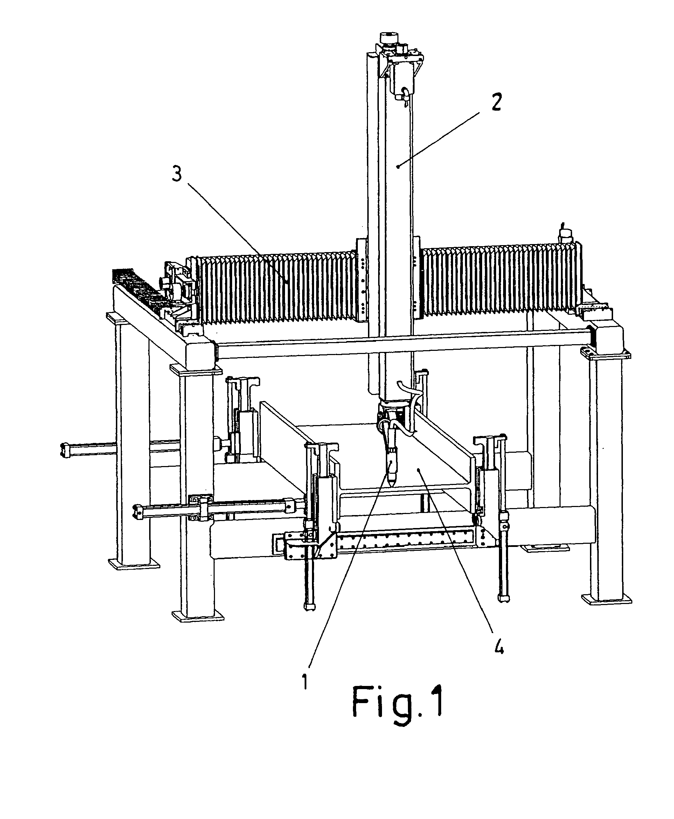

Figure 1 shows in perspective an example of a machine for plasma cutting with the assembly of the invention.
Figures 2, 3 and 4 represent respective examples of operative performance of cutting on the top part of different pieces, with the assembly disposition of the means of cutting according to the invention.
Figure 5 is an example of operative performance of cutting on the bottom part of a piece, with said assembly disposition of the means of cutting according to the invention.
Figures 6A and 6B show an example of positioning of the means of cutting in two positions at different angle, according to the conventional assembly.
Figures 7A and 7B show an example of positioning of the means of cutting in two positions at different angle, according to the assembly of the invention.

### Detailed description of the invention.

The object of the invention relates to a cutting machine, like those for plasma cutting, without this being restrictive, wherein the means of cutting (1) is incorporated with respect to the corresponding carrying column (2) according to an assembly of particular characteristics that favours the operability.

According to one embodiment, not restrictive, the carrying column (2) of the means of cutting (1), can be incorporated in a structure (3) by way of porch, in a vertical, longitudinal and transversal movable disposition, to locate and displace the means of cutting (1) relative to the work pieces (4) for carrying out the cuts foreseen.

In accordance with the invention the means of cutting (1) is mounted incorporated with respect to the carrying column (2) in lateral coupling thereon, by means of a rotary articulation (5) of axis perpendicular to said column (2).

The assembly with respect to the articulation (5) on the column (2) is established by means of a support (6), with respect to which the means of cutting (1) is incorporated in turn in rotary assembly by means of an articulation (7) of axis perpendicular to that of the articulation (5) on the column (2).

The coupling with respect to the articulation (7) on the support (6) is established by means of an arm (8), on which is mounted fixed the means of cutting (1), the aforementioned arm (8) being foreseen in a preferred manner with an angular bend which establishes the disposition of the means of cutting (1) in inclined position with respect to the column (2), favouring thereby the adoption of positions to carry out the cuts.

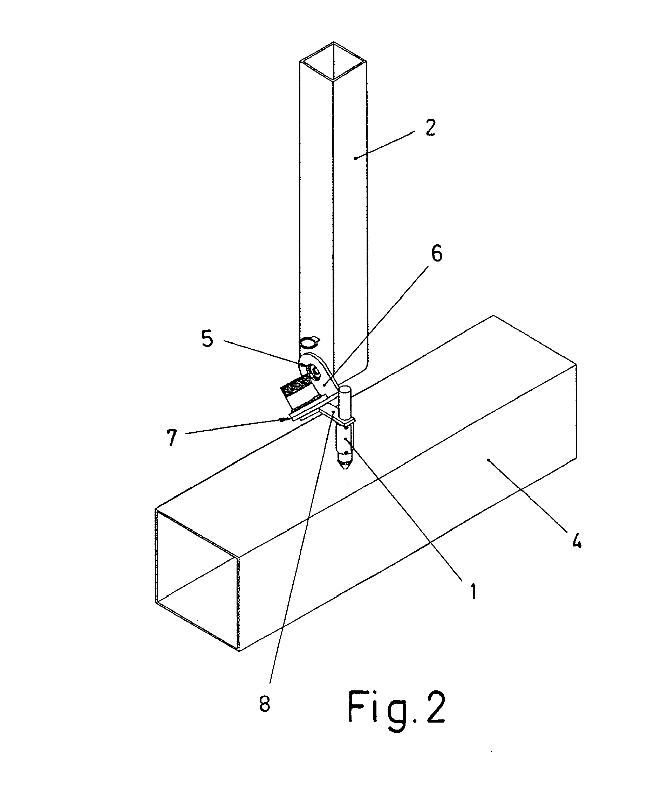

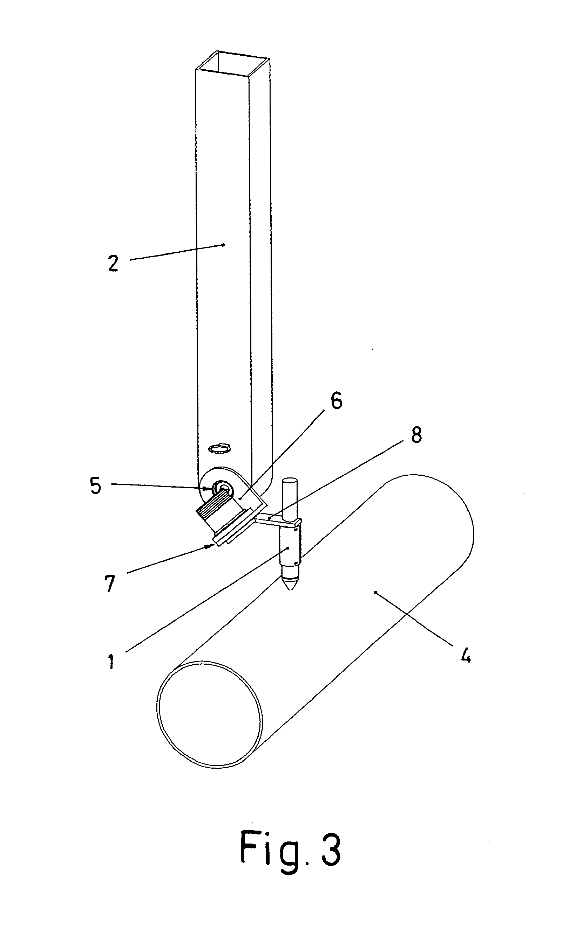

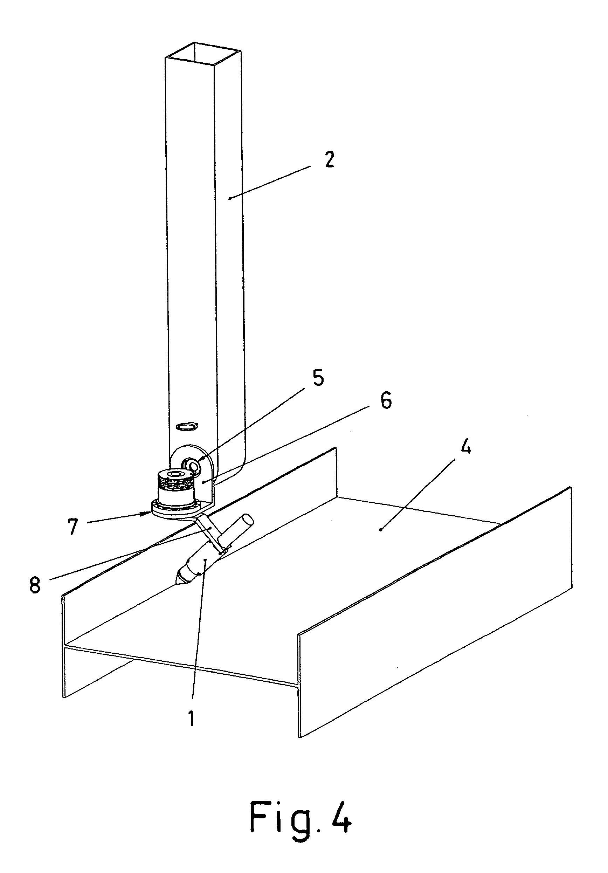

In this way a disposition is obtained which allows the means of cutting (1) to be placed in variable positions to carry out cuts on pieces (4) of different types, as are shown in figures 2, 3 and 4, without such examples being restrictive.

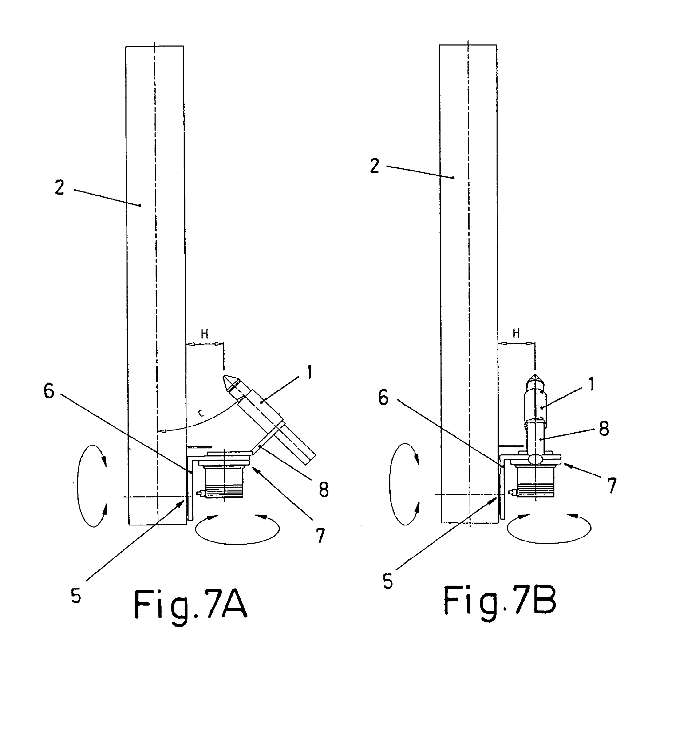

The disposition of the assembly according to the invention also allows, advantageously, the positioning of the means of cutting (1) in reverse orientation, that is, backwards with respect to the coupling (5) on the carrying column (2), it being possible to establish a variable position with a different angle (c) with respect to the column (2) in a same distance (H) of lateral separation between said means of cutting (1) and the aforementioned column (2), as shown in figures 7A and 7B.

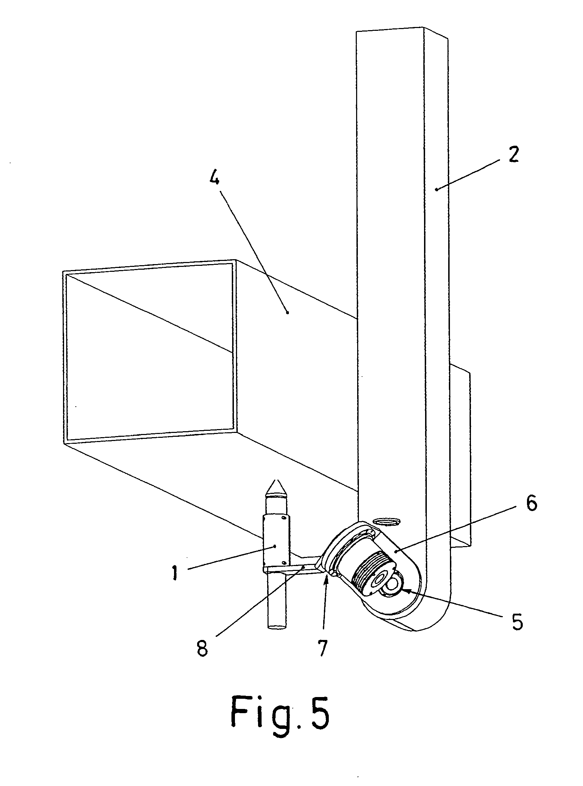

This favours the performance of cuts in actuation on the bottom part of the work pieces (4), as is shown in figure 5, especially to carry out bevel cuts under those conditions, since the inclined positioning of the means of cutting (1) can be established to carry out that type of cut maintaining the means of cutting (1) at a certain distance from the column (2).

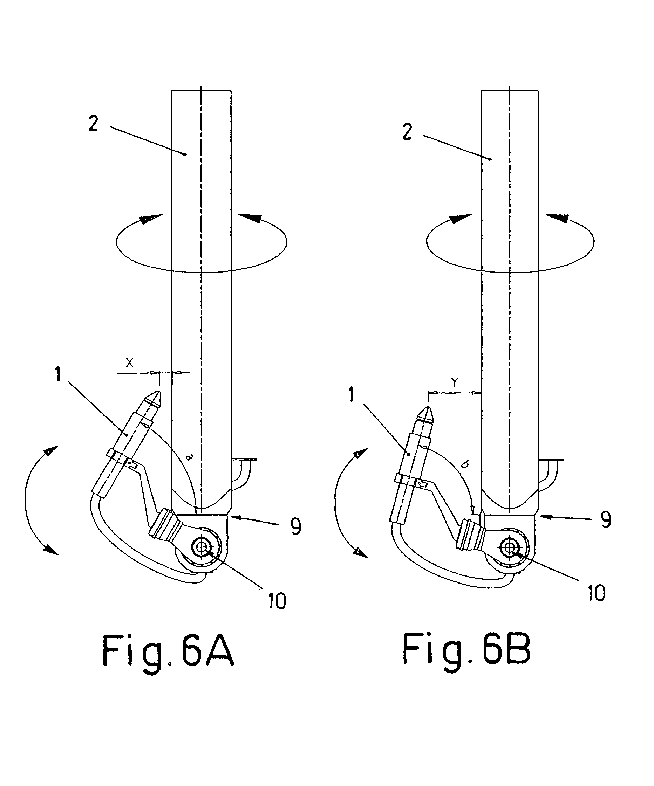

Said possibility signifies an advantageous difference with respect to the conventional embodiment of assembly with axial articulation (9) on the end of the column (2) and a vertically tilting coupling (10), as shown in figures 6A and 6B, with which the position of the means of cutting (1) at different angles (a and b) determines different distances (X and Y) of lateral separation between said means of cutting (1) and the column (2), decreasing the field with possibility of actuation from the side of the work pieces (4), as the angle of position of the means of cutting (1) decreases.

The assembly of the invention is however capable of being supplemented also with a rotary axial coupling on the end of the column (2), which increases the possibility of combining movements to locate the means of cutting (1) in cutting positions, without this altering the concept of the invention based on an assembly of lateral articulation (5) on the column (2) and a rotary coupling (7) perpendicular to said articulation (5).

For the purpose of enlarging the field of the possibility of actuation in the cuts, the arm (8) supporting the means of cutting (1) can be removable and replaceable with another of different length, or else be itself a telescopic embodiment which allows its length to be varied as suits. The possibility is also foreseen that said arm (8) can be prolonged in length by means of an auxiliary supplement in which the means of cutting (1) is incorporable in the same way as on the arm (8) itself.

Although the present invention has been developed for its preferable application in a plasma cutting machine, this is not to be understood in the restrictive sense, since it can be applied to any type of cutting machine which instead of a means of cutting (1) formed by a plasma torch has on the carrying column (2) any other conventional means of cutting.

## Claims

1. Cutting machine, of the type which comprises a means of cutting (1), such as a plasma torch, mounted in assembly of variable positioning with respect to a carrying column (2) for various cuts on the work pieces (4), **characterized in that** the means of cutting (1) is mounted in lateral assembly on the carrying column (2), by means of an articulation (5) of axis perpendicular with respect to said column (2), and an articulated coupling (7) of axis perpendicular with respect to the aforementioned lateral articulation (5) on the column (2).

2. Cutting machine, in accordance with the first claim, **characterized in that** the assembly on the lateral articulation (5) with respect to the column (2) is established by means of a support (6), on which the perpendicular articulated coupling (7) for incorporation of the means of cutting (1) is determined.

3. Cutting machine, in accordance with the first and second claims, **characterized in that** the coupling for incorporation of the means of cutting (1) in the articulated assembly (7) on the support (6) is established by means of an arm (8), preferably angular, which is capable of being extended in length to vary the field of actuation of the means of cutting (1) in the cuts.

4. Cutting machine, in accordance with the first claim, **characterized in that** the means of cutting (1) is capable of variable positioning in backward orientation with different angles (c) with respect to the carrying column (2), maintaining a same distance (H) of lateral separation between said means of cutting (1) and the column (2).
